# EUROPÄISCHE PATENTSCHRIFT

(11) **EP 4 221 912 B1**
(45) Veröffentlichungstag und Bekanntmachung des Hinweises auf die Patenterteilung: **08.01.2025**
(21) Anmeldenummer: 21820152.3
(22) Anmeldetag: 24.11.2021
(51) Int. Cl.: B21J 15/14, B21J 15/28, G01B 11/16, G01B 11/25

(54) **VERFAHREN UND BEARBEITUNGSANLAGE ZUM BEARBEITEN EINES FLUGZEUGSTRUKTURBAUTEILS**
METHOD AND MACHINING SYSTEM FOR MACHINING AN AIRCRAFT STRUCTURAL COMPONENT
PROCÉDÉ ET INSTALLATION D'USINAGE POUR USINER UN COMPOSANT STRUCTURAL D'AÉRONEF

(30) Priorität: 24.11.2020 DE 102020131086
(43) Veröffentlichungstag der Anmeldung: 09.08.2023
(73) Patentinhaber: Broetje-Automation GmbH, 26180 Rastede (DE)
(72) Erfinder: EICKHORST, Dirk, 26316 Varel (DE)
(74) Vertreter: Gottschald Patentanwälte Partnerschaft mbB
(86) Internationale Anmeldenummer: PCT/EP2021/082774
(87) Internationale Veröffentlichungsnummer: WO 2022/112299

(56) Entgegenhaltungen:
- WO-A1-2013/053350
- WO-A1-2014/165125
- WO-A1-2015/193464
- WO-A1-2020/025086
- US-A- 6 154 279

## Beschreibung

Die Erfindung betrifft ein Verfahren zum Bearbeiten eines Flugzeugstrukturbauteils gemäß Anspruch 1 sowie eine Bearbeitungsanlage zum Bearbeiten eines Flugzeugstrukturbauteils gemäß Anspruch 16.

Aus dem Stand der Technik sind verschiedene Bearbeitungsanlagen für Flugzeugstrukturbauteile bekannt. Dazu gehören auch sogenannte Bohr-Niet-Maschinen, mit denen Flugzeugstrukturbauteile gebohrt und vernietet werden können.

In der Regel weisen derartige Bearbeitungsanlagen einen Endeffektor mit einer Bohreinheit und mit einer Nieteinheit auf, welche bei der Bearbeitung des Flugzeugstrukturbauteils eine Abfolge von Bohrvorgängen und Nietvorgängen nach einer Fertigungsvorschrift abarbeiten.

Im Flugzeugbau werden besonders hohe Anforderungen an die Nietverbindungen gestellt. Daher bedarf es einer genauen Abstimmung der Bohrungen und der in diese eingesetzten Nietelemente, um enge Toleranzvorgaben zu erfüllen. Die Nietelemente dürfen in der Regel keinen oder nur einen sehr geringen Kopfüberstand aufweisen. Der Kopf eines Nietelements darf also nur sehr gering gegenüber der Oberfläche des Flugzeugstrukturbauteils hervorstehen.

Ist der Kopfüberstand zu groß, müssen die Nietelemente aufgebohrt und durch neue Nietelemente ersetzt werden. Dies erfolgt in der Regel manuell nach der Bearbeitung durch die Bearbeitungsanlage. Diese Nacharbeiten sind sehr aufwendig und arbeitsintensiv.

Um die Anzahl der nachzuarbeitenden Nietverbindungen an einem Flugzeugstrukturbauteil zu reduzieren, ist es üblich, das Bohrloch nach dem Bohren zu vermessen und insbesondere die Senktiefe des Bohrlochs zu kontrollieren. Das Vermessen eines Bohrlochs mit einer Messlanze ist beispielsweise in der DE 10 2014 108 629 A1 beschrieben.

Die EP 2 766 135 B1 beschreibt ebenfalls die Gewinnung von Geometriedaten eines Bohrlochs. Sie schlägt vor, ein Bohrloch von oben mit einer Kamera zu erfassen und anhand des Senkungsdurchmessers des Bohrlochs und des Bohrungsdurchmessers des Bohrlochs sowie des Senkungswinkels des Bohrlochs die Werkzeugsteuerdaten für eine Senktiefe einer nachfolgend auszubildenden Bohrung zu korrigieren.

Ferner ist aus der US 6,154,279 ein Messverfahren zum Vermessen von Bohrungen wie von Köpfen von Nietelementen bekannt.

Obwohl in der Vergangenheit bereits viele Anstrengungen unternommen wurden, die Anzahl der Nietverbindungen außerhalb der Toleranz an Flugzeugstrukturbauteilen zu reduzieren, kommen solche nach wie vor vor. Diese müssen aufwändig ausgebohrt und ersetzt werden.

Der Erfindung liegt das Problem zugrunde, die an sich bekannte Fertigung von Flugzeugstrukturbauteilen dahingehend weiter zu verbessern, dass weniger außerhalb der Toleranz liegende Nietverbindungen bei der Fertigung entstehen und so der Nachbearbeitungsaufwand -und die Fertigungskosten reduziert werden.

Das obige Problem wird durch die Merkmale von Anspruch 1 gelöst.

Wesentlich ist die grundsätzliche Überlegung, ein Muster auf die Bearbeitungsstelle mit in das Bohrloch eingesetztem Nietelement zu projizieren und das projizierte Muster auf der Bearbeitungsstelle mit dem Sensor zu erfassen. Die Auswertung der Projektion des Musters ermöglicht es, die Addition der Toleranz des erzeugten Bohrlochs und der Toleranz der gerade verwendeten Charge von Nietelementen hinsichtlich der zu erzeugenden oder erzeugten Nietverbindung zu bewerten und die Bohrung des Bohrlochs an der weiteren Bearbeitungsstelle automatisiert anzupassen. Diese Anpassung erfolgt basierend auf der Auswertung der Erfassungsdaten durch die Anpassung der Werkzeugsteuerdaten. Hierdurch wird an der weiteren Bearbeitungsstelle die Wahrscheinlichkeit einer Addition aus der Toleranz des Nietelements und der Toleranz der Bohrung, welche aus dem Toleranzbereich der Nietverbindung führt, minimiert.

Im Einzelnen wird ein Verfahren zum Bearbeiten eines Flugzeugstrukturbauteils mit einer Bearbeitungsanlage vorgeschlagen, wobei die Bearbeitungsanlage eine Bohreinheit und eine Nieteinheit aufweist, wobei eine Fertigungsprozesssteuerung für die Ansteuerung der Komponenten der Bearbeitungsanlage vorgesehen ist, wobei die Fertigungsprozesssteuerung nach einer Fertigungsvorschrift eine Abfolge von Bohrvorgängen mittels der Bohreinheit und von Nietvorgängen mittels der Nieteinheit anhand von Werkzeugsteuerdaten abarbeitet, wobei die Bearbeitungsanlage einen optischen Sensor und eine Projektionseinheit aufweist und wobei das Verfahren die Schritte umfasst:
- Projizieren eines Musters mit der Projektionseinheit auf eine Bearbeitungsstelle mit einem in ein Bohrloch der Bearbeitungsstelle eingesetzten Nietelement,
- Erfassen der Bearbeitungsstelle, einschließlich der Projektion des Musters mit dem Sensor und Erzeugen entsprechender Erfassungsdaten durch den Sensor,
- Auswerten der Erfassungsdaten durch eine Auswerteeinheit,
- Anpassen der Werkzeugsteuerdaten für ein gemäß der Fertigungsvorschrift anschließend zu bohrendes Bohrloch an einer weiteren Bearbeitungsstelle, insbesondere der Senktiefe des zu bohrenden Bohrlochs, durch die Fertigungsprozesssteuerung basierend auf der Auswertung der Erfassungsdaten.

Nach der bevorzugten Ausgestaltung gemäß Anspruch 2 wird bei der Auswertung ein Kopfüberstand eines Nietelements und/oder eine Schrägstellung des Nietelements ermittelt. Vorzugsweise wird, basierend auf dieser Auswertung, in den Werkzeugsteuerdaten für das anschließend zu bohrende Bohrloch die Senktiefe angepasst. Durch diese präzise Ermittlung der Lage des Nietelements im Bohrloch ist ein besonders genaues Nachjustieren der Senktiefe für das darauffolgende Bohrloch möglich.

In den Ansprüchen 3 bis 5 werden bevorzugte Ausgestaltungen des projizierten Musters beschrieben. Diese ermöglichen eine besonders genaue Bestimmung von Lage und/oder Ausrichtung des Nietelements im Bohrloch hinsichtlich Kopfüberstand und/oder Schrägstellung.

In den Ansprüchen 6 und 7 sind bevorzugte Verfahren zur Ermittlung von Kopfüberstand und Schrägstellung des Nietelements in dem Bohrloch beschrieben.

Die Ansprüche 8 bis 10 beschreiben bevorzugte Anordnungen der Projektionseinheit und des Sensors zueinander bzw. bezogen auf das Bohrloch der Bearbeitungsstelle und ermöglichen eine besonders zuverlässige und sichere Erfassung der Bearbeitungsstelle mit dem Nietelement im Bohrloch.

Vorzugsweise beruht die Auswertung und das Anpassen auf Erfassungsdaten, deren Erzeugung bei eingesetztem Nietelement und noch nicht hergestellter Nietverbindung erfolgt ist, und/oder, deren Erzeugung bei eingesetztem Nietelement und bereits hergestellter Nietverbindung erfolgt ist (Anspruch 11). Der Vorteil des Auswertens und Anpassens bei eingesetztem Nietelement, aber noch nicht hergestellter Nietverbindung, liegt in der einfachen Entfernung des Nietelements für den Fall, dass eine Toleranzabweichung festgestellt oder erwartet wird. Das Auswerten und Anpassen eines eingesetzten Nietelements mit bereits hergestellter Nietverbindung ermöglicht eine finale Beurteilung hinsichtlich der Toleranzerfüllung, da ein Setzen zwischen Nietelement und Flugzeugstrukturbauteil sowie in demselben erfolgt ist.

Die bevorzugten Ausgestaltungen gemäß den Ansprüchen 12 und 13 sehen eine Messvorrichtung zum Vermessen der Nietelemente vor und beschreiben, wie die Anpassung der Werkzeugsteuerdaten zusätzlich auf der Basis der Vermessung der Nietelemente noch weiter verbessert werden kann.

Der Anspruch 14 beschreibt, dass das Verfahren an der weiteren Bearbeitungsstelle als neuer Bearbeitungsstelle wiederholt und die Werkzeugdaten für eine auf diese neue Bearbeitungsstelle darauffolgende Bearbeitungsstelle angepasst werden können. Hierdurch ist ein kontinuierliches Optimieren der Werkzeugsteuerdaten für das Bohren möglich.

Gemäß Anspruch 15 kann das Verfahren an der weiteren Bearbeitungsstelle insbesondere dann durchgeführt werden, wenn in das Bohrloch an dieser Bearbeitungsstelle ein Nietelement einer neuen Charge eingesetzt werden soll. Da sich mit einem Chargenwechsel der Nietelemente die Tolerierung des Nietelements im Verhältnis zu Nietelementen derselben Charge stärker ändert, ist eine Wiederholung in diesem Fall für die darauffolgenden Nietelemente, welche dann ebenfalls dieser neuen Charge entstammen, besonders wichtig.

Nach einer weiteren Lehre gemäß Anspruch 16, der eigenständige Bedeutung zukommt, wird eine Bearbeitungsanlage zum Bearbeiten eines Flugzeugstrukturbauteils beansprucht. Die Bearbeitungsanlage weist eine Bohreinheit, eine Nieteinheit, eine Fertigungsprozesssteuerung für die Ansteuerung der Komponenten der Bearbeitungsanlage, einen optischen Sensor und eine Projektionseinheit auf. Es wird vorgeschlagen, dass die Bearbeitungsanlage zum Bearbeiten eines Flugzeugstrukturbauteils gemäß dem vorstehend beschriebenen Verfahren ausgebildet und eingerichtet ist. Auf alle Ausführungen zu dem vorschlagsgemäßen Verfahren darf auch in Bezug auf die Bearbeitungsanlage verwiesen werden.

Im Folgenden wird die Erfindung anhand einer lediglich Ausführungsbeispiele darstellenden Zeichnung näher erläutert. In der Zeichnung zeigt
- Fig. 1: eine vorschlagsgemäße Bearbeitungsanlage zum Bearbeiten eines Flugzeugstrukturbauteils sowie zur Durchführung eines vorschlagsgemäßen Verfahrens,
- Fig. 2: a) den Endeffektor der Bearbeitungsanlage gemäß Fig. 1 und b) ein zweites Ausführungsbeispiel eines Endeffektors einer Bearbeitungsanlage,
- Fig. 3: eine schematische Darstellung des Projizierens, Erfassens und Auswertens,
- Fig. 4: eine schematische Darstellung für verschiedene Lagen des Nietelements, welche sich im Flugzeugstrukturbauteil einstellen können, und wie diese mit dem vorschlagsgemäßen Verfahren zur Anpassung der Werkzeugsteuerdaten erfassbar und auswertbar sind und
- Fig. 5: verschiedene Ausführungsbeispiele eines Musters, welches zur Durchführung des Verfahrens auf die Bearbeitungsstelle projiziert werden kann.

Die vorschlagsgemäße Bearbeitungsanlage 1 dient zum Bearbeiten eines Flugzeugstrukturbauteils 2. Flugzeugstrukturbauteile 2 sind hier insbesondere Strukturbauteile eines Rumpfes oder eines Flügels für ein Flugzeug. Sie weisen vorzugsweise mehrere Materiallagen auf, welche von der Bearbeitungsanlage 1 miteinander verbunden werden. Im Ausführungsbeispiel ist die Bearbeitungsanlage 1 für das Bohren und Nieten des Flugzeugstrukturbauteils 2 ausgebildet. Entsprechend weist die Bearbeitungsanlage 1 eine Bohreinheit 3a zur Erzeugung von Bohrungen in dem Flugzeugstrukturbauteil 2 und eine Nieteinheit 3b für das Einsetzen von Nietelementen 4, insbesondere Senkkopfnietelementen, in die erzeugten Bohrlöcher sowie zum Herstellen der Nietverbindung auf. Durch das Herstellen der Nietverbindung werden die Materiallagen des Flugzeugstrukturbauteils 2 miteinander verbunden.

Im Ausführungsbeispiel und vorzugsweise weist die Bearbeitungsanlage 1 einen Endeffektor 3 auf und die Bohreinheit 3a und die Nieteinheit 3b sind Teil des Endeffektors 3. Diese können am Endeffektor 3 je nach der gerade vom Endeffektor 3 durchzuführenden Bearbeitung jeweils in eine aktive Arbeitsposition oder in einer Parkposition verstellt werden. Dies kann beispielsweise durch ein Linearverfahren der Bohreinheit 3a und/oder der Nieteinheit 3b erfolgen, oder beispielsweise auch durch eine Revolveranordnung.

Hier und vorzugsweise wird der Endeffektor 3 von einer Verstelleinheit 5 für den Endeffektor 3 getragen. Die Verstelleinheit 5 weist vorzugsweise mehrere Verstellachsen 5a auf, sodass der Endeffektor 3 für die Bearbeitung von verschiedenen Bearbeitungsstellen relativ zum zu bearbeitenden Flugzeugstrukturbauteil 2 verfahren werden kann.

Ferner kann die Bearbeitungsanlage 1 wie im Ausführungsbeispiel einen zweiten Endeffektor 6 aufweisen. Der zweite Endeffektor 6 ist hier und vorzugsweise während der Bearbeitung des Flugzeugstrukturbauteils 2 auf der dem Endeffektor 3 gegenüberliegenden Seite des Flugzeugstrukturbauteils 2 angeordnet. Er ist an der Herstellung der Nietverbindung beteiligt und bildet insofern ein Gegenwerkzeug zum Werkzeug des Endeffektors 3. Insofern bildet der zweite Endeffektor 6 mit dem Endeffektor 3 zusammen ein Werkzeugpaar.

Im Ausführungsbeispiel setzt die Nieteinheit 3b am Endeffektor 3 das Nietelement 4 und der zweite Endeffektor 6 stellt die Nietverbindung her. Hier erfolgt dies durch das Aufschrauben eines sogenannten Nietkollars 4a auf das Nietelement 4.

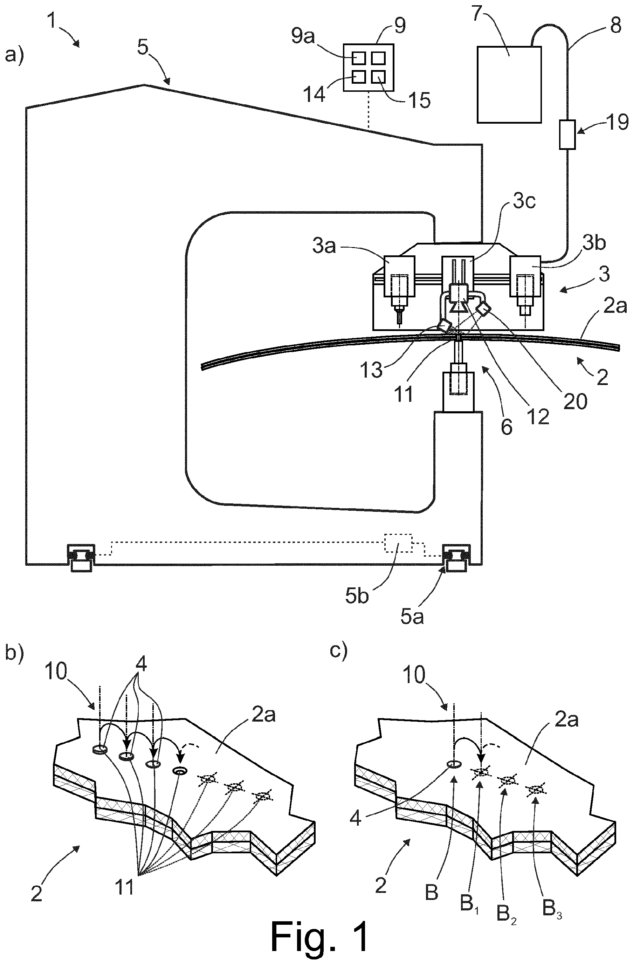

Im Ausführungsbeispiel und vorzugsweise wird der zweite Endeffektor 6 durch die Verstelleinheit 5 für den Endeffektor 3 verstellt. Dies ist in Fig. 1 dargestellt. Der zweite Endeffektor kann aber auch eine eigene Verstelleinheit aufweisen.

Hier und vorzugsweise weist die Bearbeitungsanlage 1 ferner einen Nietspeicher 7 auf. Der Nietspeicher 7 ist separat vom Endeffektor 3, insbesondere separat von der Verstelleinheit 5 der Bearbeitungsanlage, angeordnet. Hier und vorzugsweise werden die Nietelemente 4 von dem Nietspeicher 7 zum Endeffektor 3 durch einen Förderschlauch 8 befördert.

Ferner ist eine Fertigungsprozesssteuerung 9 vorgesehen. Hier und vorzugsweise weist die Bearbeitungsanlage 1 die Fertigungsprozesssteuerung 9 auf. Sie arbeitet durch eine Ansteuerung der Komponenten der Bearbeitungsanlage 1 nach einer Fertigungsvorschrift 10 eine Abfolge von Bohrvorgängen mittels der Bohreinheit 3a und von Nietvorgängen mittels der Nieteinheit 3b anhand von Werkzeugsteuerdaten 9a ab. Die Komponenten umfassen beispielsweise die Antriebe 5b der Verstelleinheit 5 zum Verstellen des oder der Endeffektoren 3, 6 bzw. der Verstelleinheiten zum Verstellen derselben.

Hier und vorzugsweise handelt es sich bei der Fertigungsprozesssteuerung 9 um eine zentrale Steuerung. Denkbar ist aber auch, dass die Fertigungsprozesssteuerung dezentral, also verteilt angeordnet ist. Insbesondere kann es sich bei der Fertigungsprozesssteuerung um eine NC-Steuerung für die Bearbeitungsanlage 1 handeln.

Ein Beispiel für eine Fertigungsvorschrift 10 ist das sequentielle Bohren und Nieten der in Fig. 1 b) in einer Reihe angeordneten Bohrlöcher 11. Dabei weisen einzelne Bohrlöcher 11 bereits Nietelemente 4 auf, während ein Bohrloch 11 noch nicht mit einem Nietelement 4 bestückt ist und durch Strichpunktlinien noch herzustellende Bohrlöcher 11 gezeigt werden.

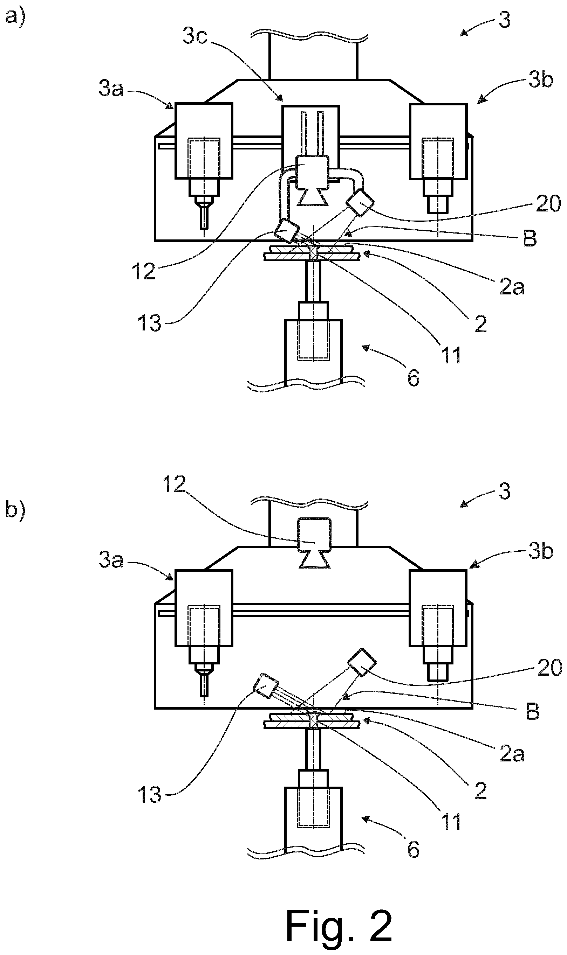

Ferner weist die vorschlagsgemäße Bearbeitungsanlage 1 einen optischen Sensor 12 und eine Projektionseinheit 13 auf. Der optische Sensor 12 ist hier eine Kamera. Im Ausführungsbeispiel und vorzugsweise sind der optische Sensor 12 und die Projektionseinheit 13 Teil des Endeffektors 3 und an diesem angeordnet. Insbesondere kann der optische Sensor 12 fest am Endeffektor 3 angeordnet sein, wie dies in der Fig. 2b) gezeigt ist. Es kann vorgesehen sein, dass die Nieteinheit 3b aus einer Arbeitsposition zum Erfassen der Bearbeitungsstelle B durch den Sensor 12 herausgefahren wird. Hierdurch kann sie dann den Blick des Sensors 11 auf die Bearbeitungsstelle B freigeben.

Alternativ kann der optische Sensor 12 jedoch auch beweglich am Endeffektor 3 angeordnet sein. Beispielsweise kann, wie in der Fig. 2a) gezeigt, der optische Sensor 12 Teil einer Sensoreinheit 3c sein, welche am Endeffektor 3 verstellbar angeordnet ist. Insbesondere kann die Sensoreinheit 3c ebenso wie die Bohreinheit 3a und die Nieteinheit 3b am Endeffektor 3 verstellbar angeordnet sein und jeweils eine der Einheiten 3a, 3b, 3c in eine aktive Position verfahren werden. Vorzugsweise sind die Bohreinheit 3a, die Nieteinheit 3b und die Sensoreinheit 3c linear am Endeffektor 3 verfahrbar und/oder in einem Revolver aufgenommen.

Hier und vorzugsweise wird bei der Abarbeitung einer Fertigungsvorschrift von Bohrvorgängen mittels der Bohreinheit 3a und von Nietvorgängen mittels der Nieteinheit 3b anhand von Werkzeugsteuerdaten 9a das folgende Verfahren durchgeführt:
Projizieren eines Musters M auf eine Bearbeitungsstelle B mit einem in ein Bohrloch 11 der Bearbeitungsstelle B eingesetzten Nietelement 4. Die Projektion erfolgt hier mittels der Projektionseinheit 13. Erfassen der Bearbeitungsstelle B einschließlich der Projektion des Musters M mit dem optischen Sensor 12 und Erzeugen entsprechender Erfassungsdaten 14 durch den Sensor 12.

Dann werden die Erfassungsdaten 14 ausgewertet. Die Auswertung wird vorzugsweise durch eine Auswerteeinheit 15 vorgenommen, welche weiter vorzugsweise der Fertigungsprozesssteuerung 9 zugeordnet ist und/oder ein Teil der Fertigungsprozesssteuerung 9 ist.

Anpassen der Werkzeugsteuerdaten 9a für ein gemäß der Fertigungsvorschrift 10 anschließend zu bohrendes Bohrloch 11 an einer weiteren Bearbeitungsstelle B₁ basierend auf der Auswertung der Erfassungsdaten 14. Dies erfolgt hier durch die Fertigungsprozesssteuerung 9.

Durch das Projizieren, Erfassen und Auswerten kann die Qualität der Nietverbindung an der Bearbeitungsstelle B bzw. eine voraussichtliche Qualität der Nietverbindung an der Bearbeitungsstelle B beurteilt werden. Dies ermöglicht es, die Werkzeugsteuerdaten 9a für ein anschließend zu bohrendes Bohrloch 11 an einer weiteren Bearbeitungsstelle B₁ besonders präzise anzupassen, um an der weiteren Bearbeitungsstelle B₁ mit gesteigerter Sicherheit eine Nietverbindung im Toleranzbereich zu erzeugen. Das vorschlagsgemäße Verfahren erlaubt nicht nur eine automatisierte Qualitätsbeurteilung der Nietverbindung an der Bearbeitungsstelle B, sondern auch ein automatisiertes Optimieren des Bohrvorgangs an einer weiteren Bearbeitungsstelle B₁ und damit der Nietverbindung an dieser weiteren Bearbeitungsstelle B₁. Die Fertigungsprozesssteuerung 9 kann die Werkzeugsteuerdaten 9a autonom, das heißt ohne Eingriff eines Bedieners, basierend auf der Erfassung und Auswertung anpassen. Bei dieser weiteren Bearbeitungsstelle B₁ handelt es sich hier und vorzugsweise um die unmittelbar auf die Bearbeitungsstelle B gemäß der Fertigungsvorschrift 10 folgende Bearbeitungsstelle B₁.

Vorzugsweise hat auch die Bohreinheit 3a des Endeffektors 3 das Bohrloch 11 an der Bearbeitungsstelle B gemäß der Fertigungsvorschrift 10 gebohrt und die Nieteinheit 3b das Nietelement 4 in das Bohrloch 11 eingesetzt, bevor das vorschlagsgemäße Verfahren durchgeführt wird.

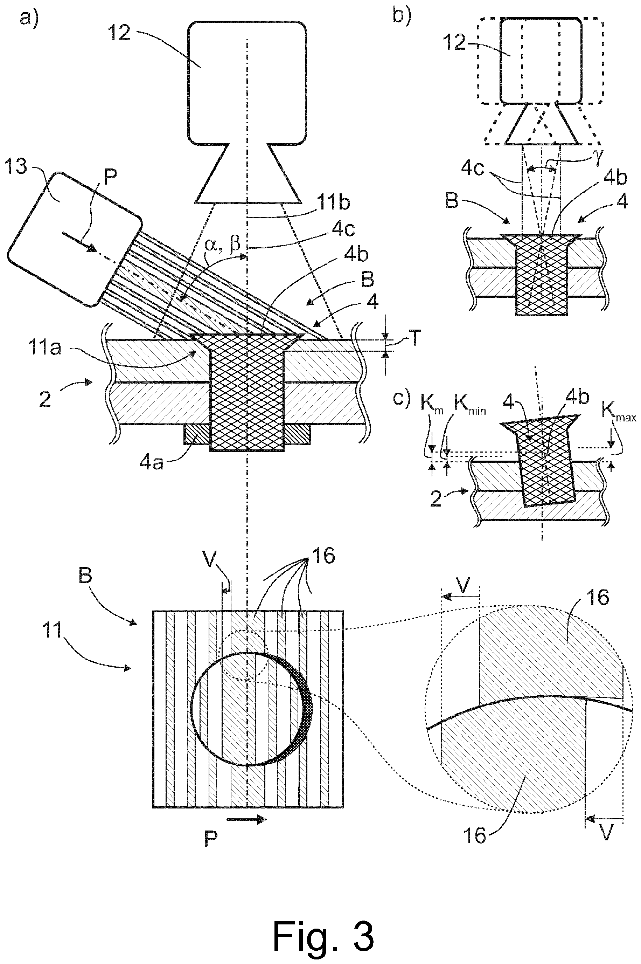

Besonders vorteilhaft ist es, wenn bei der Auswertung ein Kopfüberstand K des Nietelements 4 ermittelt wird und/oder bei der Auswertung eine Schrägstellung des Nietelements 4 ermittelt wird. Die Schrägstellung des Nietelements 4 ist hier die Neigung der Längsachse des Nietelements 4 gegenüber der Bohrlochlängsachse 11 b. Hier und vorzugsweise wird dann basierend auf dieser Auswertung und Ermittlung von Kopfüberstand K und/oder Schrägstellung S in den Werkzeugsteuerdaten 9a für das anschließend zu bohrende Bohrloch 11 die Senktiefe T angepasst. Dabei wird darauf verwiesen, dass der Kopfüberstand K ein positiver Kopfüberstand in dem Sinne sein kann, dass der Kopf 4b des Nietelements 4 gegenüber der Oberfläche des Flugzeugstrukturbauteils 2 an der Bearbeitungsstelle B hervorsteht oder ein negativer Kopfüberstand K sein kann, bei dem der Kopf 4b des Nietelements 4 nicht aus einem Senkbereich 11a des Bohrlochs 11 herausragt. Zusätzlich oder alternativ ist es auch möglich, dass für ein einzelnes Nietelement 4 mehrere Kopfüberstände K bestimmt werden. Dies kann dann beispielsweise ein maximaler Kopfüberstand Kₘₐₓ sein, womit der Abstand des am weitesten gegenüber der Flugzeugstrukturbauteiloberfläche 2a hervorstehende Punkt des Nietelements gemeint ist, oder, ein minimaler Kopfüberstand Kₘᵢₙ, womit ein am wenigsten gegenüber der Flugzeugstrukturbauteiloberfläche 2a hervorstehender Kopfteil des Nietelements 4 gemeint ist, und/oder, ein mittlerer Kopfüberstand Kₘ bestimmt werden, womit der Abstand zwischen der Flugzeugstrukturbauteiloberfläche 2a und dem Kopfende 4b bezogen auf die Längsachse 4c des Nietelements 4 gemeint ist. Dies ist in der Fig. 3b) gezeigt.

Zusätzlich oder alternativ kann die Anpassung der Werkzeugsteuerdaten 9a für das anschließend zu bohrende Bohrloch 11 an der weiteren Bearbeitungsstelle B₁ auch auf der Auswertung eines, zweier oder aller drei dieser spezifischen Kopfüberstände Kₘₐₓ, Kₘᵢₙ, Kₘ erfolgen.

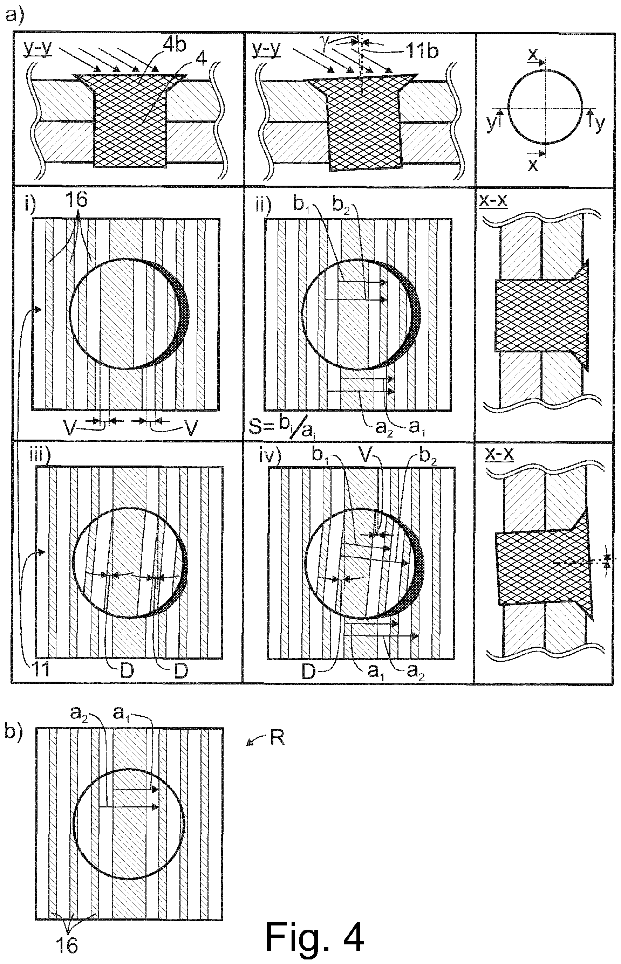

Um den Kopfüberstand K und/oder die Schrägstellung des Nietelements 4 gegenüber dem Flugzeugstrukturbauteil 2 besonders genau ermitteln zu können, sind besondere Ausgestaltung des Musters M bevorzugt. Besonders bevorzugt wird eine Streifenprojektion, wie in den Fig. 3 und 4 gezeigt ist, verwendet.

Vorzugsweise weist das Muster M mindestens einen Streifen 16 auf. Insbesondere kann das Muster M eine Streifenprojektion mit mindestens zwei oder mindestens drei, insbesondere parallelen, Streifen 16 sein. Ein solches Muster M ist in der Fig. 3 gezeigt. Dabei ist hier und vorzugsweise mindestens ein Streifen 16 breiter oder schmaler als der oder die anderen Streifen 16 und/oder ein Abstand der Streifen 16 zueinander ist unterschiedlich. Ist dies der Fall, kann aus der Projektion, sofern die Richtung der Projektion, aus der die Projektionseinheit 13 die Bearbeitungsstelle B mit der Projektion versieht, bekannt ist, auch festgestellt werden, ob das Nietelement 4 gegenüber dem Flugzeugstrukturbauteil 2 an der Bearbeitungsstelle B herausschaut oder versenkt ist. Zusätzlich kann geprüft werden, ob zumindest abschnittsweise ein Senkdurchmesser des Bohrlochs trotz eingesetztem Nietelement 4 optisch mit dem Sensor 12 erfassbar ist. Ist dies der Fall, liegt zumindest in diesem Bereich ein negativer Kopfüberstand K vor. Die Auswerteeinheit 15 kann auf diese Weise eine Plausibilitätsprüfung durchführen.

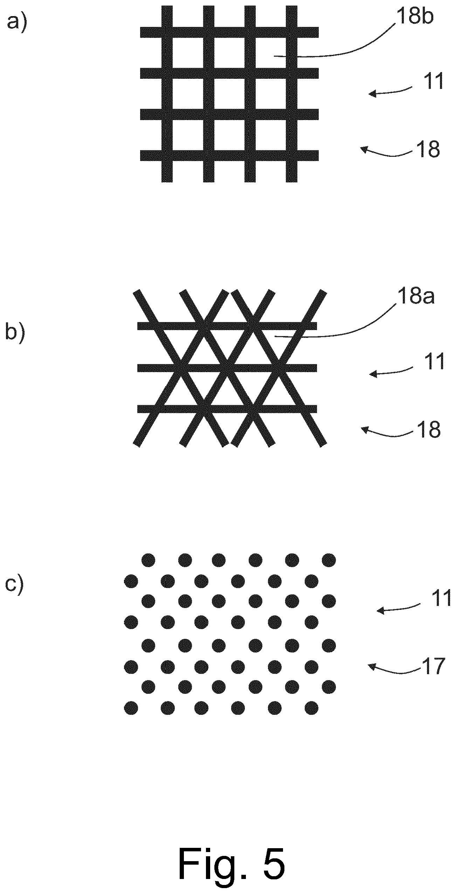

Alternative Muster M sind im Ausführungsbeispiel der Fig. 5 gezeigt. Das Muster M kann beispielsweise ausschließlich aus parallelen Streifen 16 bestehen, oder das Muster M kann aus einer vorbestimmten Punktwolke 17 bestehen, oder das Muster M kann ein Gittermuster 18 sein. Vorzugsweise ist das Gittermuster 18 dann aus Mehrecken, insbesondere Dreiecken 18a oder Vierecken 18b, aufgebaut, wie dies in der Fig. 5 gezeigt ist.

Wie mittels des projizierten Musters M der Kopfüberstand K und/oder die Schrägstellung S des Nietelements 4 ermittelt wird, soll anhand der Fig. 3 und 4 nachfolgend kurz beschrieben werden.

Die Fig. 3 zeigt eine schematische Ansicht der Bearbeitungsstelle B mit in das Bohrloch 11 eingesetztem Nietelement 4. Die Längsachsen 4c, 11b von Nietelement 4 und Bohrloch 11 sind hier koaxial.

Die Projektionseinheit 13 projiziert ein Muster M von der Seite auf die Bearbeitungsstelle B. Diese wird durch das eingesetzte Nietelement 4 sowie eine sich um das Bohrloch 11 mit dem eingesetzten Nietelement 4 erstreckenden Abschnitt des Flugzeugstrukturbauteils 2 gebildet. Der Kopf 4b des Nietelements 4 steht etwas gegenüber der Flugzeugstrukturbauteiloberfläche des Nietelements 4 hervor. Wie die Aufsicht zeigt, unterscheidet sich die Projektion des Musters M auf der Flugzeugstrukturbauteiloberfläche von der auf dem Kopf 4b des Nietelements 4. Dies, aufgrund der unterschiedlichen Höhenlage, hier des Kopfüberstandes K des Nietelements 4.

Vorzugsweise wird der Kopfüberstand K durch die Bestimmung eines Versatzes des Musters M auf dem Kopf 4b des Nietelements 4 im Verhältnis zum Muster M auf dem Flugzeugstrukturbauteil 2 an der Bearbeitungsstelle B und/oder gegenüber einer Referenz R ermittelt. Im Ausführungsbeispiel wird der Versatz V eines oder mehrerer Streifen 16 des Musters M hierfür ermittelt. Dies ist zusätzlich auch in der Fig. 4 a) i) gezeigt. Bei der Referenz R kann es sich um eine Referenzerfassung handeln, welche insbesondere auch mit dem Sensor 12 im Rahmen eines Kalibrierungsverfahrens aufgenommen wurde, und/oder es kann sich um ein Referenzmodell handeln, welches zu diesem Zweck erzeugt wurde. Eine solche Referenz ist in der Fig. 4b) gezeigt.

Zusätzlich oder alternativ kann an der Bearbeitungsstelle B eine Schrägstellung des Nietelements 4 durch die Bestimmung einer Verdrehung D des Musters M auf dem Kopf 4b des Nietelements 4 zum Muster M auf dem Flugzeugstrukturbauteil 2 an der Bearbeitungsstelle B und/oder gegenüber einer bzw. der Referenz R und/oder die Bestimmung einer Stauchung bzw. Streckung S des Musters M auf dem Kopf 4b des Nietelements 4 im Verhältnis zu dem Muster M auf dem Flugzeugstrukturbauteil 2 an der Bearbeitungsstelle B und/oder gegenüber einer bzw. der Referenz R ermittelt werden. Dies kann beispielsweise durch die Bestimmung des Verhältnisses des Abstands b der Linien auf dem Kopf des Nietelements zu dem Abstand a der Linien auf dem Flugzeugstrukturbauteil 2 an der Bearbeitungsstelle B. Bei der Referenz R kann es sich um eine Referenzerfassung handeln, welche insbesondere auch mit dem Sensor 12 im Rahmen eines Kalibrierungsverfahrens aufgenommen wurde und/oder es kann sich um ein Referenzmodell handeln, welches zu diesem Zweck erzeugt wurde. Insbesondere handelt es sich hierbei um dieselbe Referenzerfassung und/oder dasselbe Referenzmodell wie für die Bestimmung des Kopfüberstandes K.

Bei einer Aufsicht von oben wird die Schrägstellung in Richtung der Projektion P vorzugsweise über die Bestimmung einer Stauchung bzw. Streckung S des Musters M auf dem Kopf 4b des Nietelements 4 im Verhältnis zu dem Muster M auf dem Flugzeugstrukturbauteil 2 an der Bearbeitungsstelle B und/oder zu der Referenz R ermittelt. In der Fig. 4 a) ist dies in ii) gezeigt. Hier wird die Stauchung bzw. Streckung S durch das Verhältnis der Abstände a, b der Streifen 16 auf dem Nietelement 4 zu dem auf dem Flugzeugstrukturbauteil 2 bestimmt.

Die Schrägstellung quer zur Richtung der Projektion wird vorzugsweise durch die Bestimmung einer Verdrehung D des Musters M auf dem Kopf 4b des Nietelements 4 zum Muster M auf dem Flugzeugstrukturbauteil 2 an der Bearbeitungsstelle B und/oder zu der Referenz R bestimmt. Dies ist in der Fig. 4a) in iii) gezeigt. Hier wird die Verdrehung D der Streifen 16 auf dem Kopf 4b des Nietelements 4 zu den Streifen auf dem Flugzeugstrukturbauteil 2 bestimmt.

Bei einer Überlagerung von Kopfüberstand K und Schrägstellung, insbesondere in Richtung der Projektion P und quer zur Richtung der Projektion P, wie in Fig. 4a in iv) dargestellt, werden vorzugsweise sowohl der Versatz V, die Stauchung bzw. Streckung S als auch die Verdrehung V zur Anpassung der Werkzeugsteuerdaten 9a herangezogen.

Die Projektionseinheit 13 und der Sensor 12 sind beim Erfassen der Bearbeitungsstelle B in einem Winkel α auf diese gerichtet. Dies ist in den Fig. 1 bis 3 gezeigt. Der Winkel α wird zwischen der optischen Achse 16 des Sensors 12 und der Richtung der Projektion P von der Projektionseinheit 13 gebildet. Dieser Winkel α beträgt zwischen 20° und 90°, weiter vorzugsweise zwischen 45° und 75°, weiter vorzugsweise zwischen 55° und 65°, hier im Wesentlichen 60°.

Vorzugsweise ist die Projektionseinheit 13 beim Erfassen, bezogen auf die Längsachse des Bohrlochs 11b, winkelig auf die Bearbeitungsstelle gerichtet. Der Winkel β zwischen der Richtung der Projektion P von der Projektionseinheit und der Längsachse 11b des Bohrlochs 11 beträgt vorzugsweise zwischen 45° und 75°, weiter vorzugsweise zwischen 55° und 65°, hier im Wesentlichen 60°. Der Abstand der Projektionseinheit 13 zum Bohrloch 11 beim Erfassen beträgt vorzugsweise maximal 30 cm, weiter vorzugsweise maximal 20 cm, weiter vorzugsweise maximal 15 cm.

Der Sensor 12 ist hier beim Erfassen, insbesondere orthogonal, von oben auf die Bearbeitungsstelle B gerichtet. Vorzugsweise ist der Sensor 12, insbesondere der Punkt des Sensors 12, an dem seine optische Achse 4c aus ihm austritt, beim Erfassen in einem Kegel angeordnet, dessen Mittelachse koaxial zur Längsachse 11b des Bohrlochs ist und dessen Kegelspitze auf der (theoretischen) Oberfläche des Flugzeugstrukturbauteils 2 vor dem Bohren der Bohrung 11 liegt und dessen Kegelwinkel (γ) angeordnet vorzugsweise kleiner gleich 10°, weiter vorzugsweise kleiner gleich 5°, weiter vorzugsweise kleiner gleich 2° ist. Dies ist in der Fig. 3b) gezeigt. Im Ausführungsbeispiel sind die optische Achse des Sensors 12 und die Längsachse 11b des Bohrlochs 11 im Wesentlichen koaxial.

Die Auswertung und das Anpassen beruht vorzugsweise auf Erfassungsdaten, deren Erzeugung bei eingesetzten Nietelement 4 aber noch nicht hergestellter Nietverbindung erfolgt ist. Hierdurch können sowohl Toleranzen des Nietelements 4 als auch des Bohrlochs 11, insbesondere resultierend aus dem Verschleiß des Bohrers für die Anpassung der Werkzeugsteuerdaten 9a berücksichtigt werden. Dies hat zudem den Vorteil, dass das Nietelement 4 einfach aus dem Bohrloch 11 entfernt werden kann.

Zusätzlich oder alternativ kann vorgesehen sein, dass die Auswertung und das Anpassen auf Erfassungsdaten beruht, deren Erzeugung bei eingesetztem Nietelement 4 und bereits hergestellter Nietverbindung erfolgt ist. In diesem Fall können zusätzlich für die Anpassung der Werkzeugsteuerdaten 9a auch durch die Nietverbindung bedingte Setzvorgänge berücksichtigt werden. Im Ausführungsbeispiel der Fig. 3a) ist die Nietverbindung hergestellt. Ein Nietkollar 4a wurde hier von dem zweiten Endeffektor 6 auf das Nietelement 4 geschraubt.

Vorzugsweise werden die Werkzeugsteuerdaten 9a für das gemäß der Fertigungsvorschrift 10 anschließend zu bohrende Bohrloch 11 an der weiteren Bearbeitungsstelle B₁ zusätzlich auch basierend auf der Vermessung des in dieses Bohrloch 11 zu setzenden Nietelements 4 angepasst. Wie in der Fig. 1 gezeigt, kann hierfür eine Messvorrichtung 19 zum Vermessen der Nietelemente 4 vor dem Einsetzen in die Bohrlöcher 11 vorgesehen sein. Im Ausführungsbeispiel ist die Messvorrichtung 19 im Förderschlauch 8 vom Nietspeicher 7 zum Endeffektor 3 vorgesehen. Eine solche Messvorrichtung 19 kann beispielsweise wie in der DE 10 2014 106 312 A1 beschrieben ausgebildet sein.

Zusätzlich oder alternativ kann vorgesehen sein, dass auch das in das Bohrloch der Bearbeitungsstelle B eingesetzte Nietelement 4 vor dem Einsetzen von der Messvorrichtung 19 vermessen wurde und dass die Werkzeugsteuerdaten 9a für das gemäß der Fertigungsvorschrift 10 anschließend zu bohrende Bohrloch 11 an der weiteren Bearbeitungsstelle B zusätzlich auch basierend auf der Vermessung des in das Bohrloch 11 der Bearbeitungsstelle B eingesetzten Nietelements 4 angepasst werden.

Das vorschlagsgemäße Verfahren, ggf. einschließlich der weiteren bevorzugt vorgeschlagenen Ausgestaltung, kann an der weiteren Bearbeitungsstelle B als neue Bearbeitungsstelle B₁ wiederholt werden. Die Werkzeugsteuerdaten 9a werden dann für eine auf diese neue Bearbeitungsstelle B₁ folgende Bearbeitungsstelle B₂ angepasst. Alternativ kann auch vorgesehen sein, dass das Projizieren, Erfassen und Auswerten mit der darauffolgenden Anpassung der Werkzeugsteuerdaten nach einer vorbestimmten Anzahl von Bohrungen wiederholt wird, insbesondere alle 5 oder 10 Bohrungen einer Fertigungsvorschrift 10.

Zudem kann vorgesehen sein, dass die Fertigungsprozesssteuerung 9 erfasst, ob das an der weiteren Bearbeitungsstelle B₁ zu setzende Nietelement 4 zu derselben Charge wie das eingesetzte Nietelement 4 an der Bearbeitungsstelle B gehört, oder, ob es zu einer neuen Charge gehört, vorzugsweise, dass, wenn das an der weiteren Bearbeitungsstelle B₁ zu setzende Nietelement 4 zu einer neuen Charge gehört, das Verfahren an der weiteren Bearbeitungsstelle B₁ als neue Bearbeitungsstelle B wiederholt wird und die Werkzeugsteuerdaten 9a für eine auf diese neue Bearbeitungsstelle B₁ drauffolgende Bearbeitungsstelle B₂ angepasst werden.

Dabei kann vorgesehen sein, dass das Verfahren nicht für jede der weiteren Bearbeitungsstellen B₁ durchgeführt wird, wenn die in die Bohrlöcher 11 dieser weiteren Bearbeitungsstellen B einzusetzenden Nietelemente 4 zu derselben Charge wie das an der Bearbeitungsstelle B eingesetzte Nietelement 4 gehören.

Eine Vermessung der Nietelemente 4 kann beispielswiese in der zuvor beschriebenen Messvorrichtung und/oder beim Abfüllen oder Einsortieren der Nietelemente 4 in einen Nietspeicher 7 erfolgen. Durch diese Messung kann beispielsweise ermittelt werden, welche Nietelemente 4 zu einer Charge gehören.

Zudem kann vorgesehen sein, dass an der Bearbeitungsstelle B vor dem Einsetzen des Nietelements 4 in das Bohrloch 11 ein, insbesondere das Muster M, auf die Bearbeitungsstelle B mittels der Projektionseinheit 13 projiziert wird und die Bearbeitungsstelle B mit dem Bohrloch 11 ohne eingesetztes Nietelement 4 einschließlich der Projektion des Musters M mit einem, insbesondere dem Sensor 12 erfasst wird. Zusätzlich kann also auch das Bohrloch 11 der Bearbeitungsstelle B mit der Projektionseinheit 13 und dem Sensor 12 ausgewertet werden. Beispielsweise können der Senkdurchmesser und/oder der Bohrungsdurchmesser bestimmt werden. Hier und vorzugsweise wird aus dem Senkdurchmesser und Informationen des für das Bohrloch 11 verwendeten Bohrers eine Senktiefe T für das Bohrloch der Bearbeitungsstelle B bestimmt. Die Werkzeugsteuerdaten 9a für das gemäß der Fertigungsvorschrift 10 anschließend zu bohrende Bohrloch 11 an der weiteren Bearbeitungsstelle B, insbesondere der Senktiefe T des zu bohrenden Bohrlochs 11, können dann zusätzlich auch basierend auf der Auswertung dieser Erfassungsdaten angepasst werden.

Zusätzlich oder alternativ kann vorgesehen sein, dass an der weiteren Bearbeitungsstelle B₁ vor dem Einsetzen des Nietelements 4 in das Bohrloch 11 ein, insbesondere das Muster M, auf die weitere Bearbeitungsstelle B₁ mittels der Projektionseinheit 13 projiziert wird und die weitere Bearbeitungsstelle B₁ mit dem Bohrloch 11 ohne eingesetztes Nietelement 4 einschließlich der Projektion des Musters M mit einem, insbesondere dem Sensor 12 erfasst wird. Zusätzlich kann also auch das Bohrloch 11 der weiteren Bearbeitungsstelle B₁ mit der Projektionseinheit 13 und dem Sensor 12 ausgewertet werden. Beispielsweise können der Senkdurchmesser und/oder der Bohrungsdurchmesser bestimmt werden. Hier und vorzugsweise wird aus dem Senkdurchmesser und Informationen des für das Bohrloch 11 der weiteren Bearbeitungsstelle B₁ verwendeten Bohrers eine Senktiefe T bestimmt. Daraufhin kann dann basierend auf der Auswertung dieser Erfassungsdaten 14 erneut mit angepassten Werkzeugsteuerdaten 9a, insbesondere einer höheren Senktiefe T, erneut gebohrt werden, und/oder, die Werkzeugsteuerdaten 9a können für ein weiteres gemäß der Fertigungsvorschrift 10 anschließend zu bohrendes Bohrlochs 11 an der darauffolgenden Bearbeitungsstelle B₂, insbesondere die Senktiefe T des zu bohrenden Bohrlochs 11, zusätzlich auch basierend auf der Auswertung dieser Erfassungsdaten 14 angepasst werden.

Schließlich kann eine zusätzliche Beleuchtung 20 zum Beleuchten der Bearbeitungsstelle während des Projizierens und Erfassens vorgesehen sein. Hierdurch kann durch das zusätzlich auf die Bearbeitungsstelle B fallende Licht die Erfassungsgenauigkeit gesteigert werden.

## Patentansprüche

1. Verfahren zum Bearbeiten eines Flugzeugstrukturbauteils (2) mit einer Bearbeitungsanlage (1), wobei die Bearbeitungsanlage (1) eine Bohreinheit (3a) und eine Nieteinheit (3b) aufweist,
wobei eine Fertigungsprozesssteuerung (9) für die Ansteuerung der Komponenten der Bearbeitungsanlage (1) vorgesehen ist,
wobei die Fertigungsprozesssteuerung (9) nach einer Fertigungsvorschrift (10) eine Abfolge von Bohrvorgängen mittels der Bohreinheit (3a) und von Nietvorgängen mittels der Nieteinheit (3b) anhand von Werkzeugsteuerdaten (9a) abarbeitet,
wobei die Bearbeitungsanlage (1) einen optischen Sensor (12) und eine Projektionseinheit (13) aufweist,
wobei das Verfahren die Schritte umfasst:
- Projizieren eines Musters (M) mit der Projektionseinheit (13) auf eine Bearbeitungsstelle (B) mit einem in ein Bohrloch (11) der Bearbeitungsstelle (B) eingesetzten Nietelement (4),
- Erfassen der Bearbeitungsstelle (B) einschließlich der Projektion des Musters (M) mit dem Sensor (12) und Erzeugen entsprechender Erfassungsdaten (14) durch den Sensor (12),
- Auswerten der Erfassungsdaten (14) durch eine Auswerteeinheit (15),
- Anpassen der Werkzeugsteuerdaten (9a) für ein gemäß der Fertigungsvorschrift (10) anschließend zu bohrendes Bohrloch (11) an einer weiteren Bearbeitungsstelle (B1), insbesondere der Senktiefe (T) des zu bohrenden Bohrlochs (11), durch die Fertigungsprozesssteuerung (9) basierend auf der Auswertung der Erfassungsdaten (14).

2. Verfahren nach Anspruch 1, **dadurch gekennzeichnet, dass** bei der Auswertung ein Kopfüberstand (K) des Nietelements (4) ermittelt wird, und/oder, dass bei der Auswertung eine Schrägstellung des Nietelements (4) ermittelt wird, vorzugsweise, dass basierend auf dieser Auswertung in den Werkzeugsteuerdaten (9a) für das anschließend zu bohrende Bohrloch (11) die Senktiefe (T) angepasst wird.

3. Verfahren nach Anspruch 1 oder 2, **dadurch gekennzeichnet, dass** das Muster (M) mindestens einen Streifen (16) aufweist, vorzugsweise, dass das Muster (M) eine Streifenprojektion mit mindestens zwei oder mindestens drei, insbesondere parallelen, Streifen (16) ist.

4. Verfahren nach einem der vorhergehenden Ansprüche, **dadurch gekennzeichnet, dass** mindestens ein Streifen (16) breiter oder schmaler als der oder die anderen Streifen (16) ist und/oder ein Abstand der Streifen (16) zueinander unterschiedlich ist.

5. Verfahren nach einem der vorhergehenden Ansprüche, **dadurch gekennzeichnet, dass** das Muster (M) ausschließlich aus parallelen Streifen (16) besteht, oder, dass das Muster (M) aus einer vorbestimmten Punktwolke (17) besteht, oder, dass das Muster (M) ein Gittermuster (18) ist, vorzugsweise, dass das Gittermuster (18) aus Mehrecken, insbesondere Dreiecken (18a) und/oder Vierecken (18b), besteht.

6. Verfahren nach einem der vorhergehenden Ansprüche, **dadurch gekennzeichnet, dass** an der Bearbeitungsstelle (B) der Kopfüberstand (K) durch die Bestimmung eines Versatzes (V) des Musters (M), insbesondere eines oder mehrerer Streifen (16) des Musters (M), auf dem Kopf (4b) des Nietelements (4) im Verhältnis zum Muster (M) auf dem Flugzeugstrukturbauteil (2) an der Bearbeitungsstelle (B) oder gegenüber einer Referenz (R) ermittelt wird.

7. Verfahren nach einem der vorhergehenden Ansprüche, **dadurch gekennzeichnet, dass** an der Bearbeitungsstelle (B) eine Schrägstellung des Nietelements (4) durch die Bestimmung einer Verdrehung (D) des Musters (M) auf dem Kopf (4b) des Nietelements (4) zum Muster (M) auf dem Flugzeugstrukturbauteil (2) an der Bearbeitungsstelle (B) oder gegenüber einer Referenz (R) und/oder die Bestimmung einer Stauchung bzw. Streckung (S) des Musters (M) auf dem Kopf (4b) des Nietelements im Verhältnis zu dem Muster (M) auf dem Flugzeugstrukturbauteil (2) an der Bearbeitungsstelle (B) oder gegenüber einer Referenz (R) ermittelt wird.

8. Verfahren nach einem der vorhergehenden Ansprüche, **dadurch gekennzeichnet, dass** die Projektionseinheit (13) und der Sensor (12) beim Erfassen der Bearbeitungsstelle (B) in einem Winkel (α) zueinander auf diese gerichtet sind, vorzugsweise, dass dieser Winkel (α) zwischen 20° und 90°, weiter vorzugsweise zwischen 45° und 75°, weiter vorzugsweise zwischen 55° und 65°, insbesondere im Wesentlichen 60°, beträgt.

9. Verfahren nach einem der vorhergehenden Ansprüche, **dadurch gekennzeichnet, dass** die Projektionseinheit (13) beim Erfassen bezogen auf die Längsachse des Bohrlochs (11) winkelig auf die Bearbeitungsstelle (B) gerichtet ist, vorzugsweise, dass der Winkel (β) zwischen der Richtung der Projektion (P) von der Projektionseinheit (13) und der Längsachse (11b) des Bohrlochs (11) zwischen 45° und 75°, weiter vorzugsweise zwischen 55° und 65°, insbesondere im Wesentlichen 60° beträgt.

10. Verfahren nach einem der vorhergehenden Ansprüche, **dadurch gekennzeichnet, dass** der Sensor (12) beim Erfassen, insbesondere orthogonal, von oben auf die Bearbeitungsstelle (B) gerichtet ist.

11. Verfahren nach einem der vorhergehenden Ansprüche, **dadurch gekennzeichnet, dass** die Auswertung und das Anpassen auf Erfassungsdaten (14) beruht, deren Erzeugung bei eingesetzten Nietelement (4) und noch nicht hergestellter Nietverbindung erfolgt ist, und/oder, dass die Auswertung und das Anpassen auf Erfassungsdaten (14) beruht, deren Erzeugung bei eingesetztem Nietelement und bereits hergestellter Nietverbindung erfolgt ist.

12. Verfahren nach einem der vorhergehenden Ansprüche, **dadurch gekennzeichnet, dass** eine Messvorrichtung (19) zum Vermessen der Nietelemente (4) vor dem Einsetzen in die Bohrlöcher (11) vorgesehen ist und dass die Werkzeugsteuerdaten (9a) für das gemäß der Fertigungsvorschrift (10) anschließend zu bohrende Bohrloch (11) an der weiteren Bearbeitungsstelle (B₁) zusätzlich auch basierend auf der Vermessung des in dieses Bohrloch (11) zu setzenden Nietelements (4) angepasst werden.

13. Verfahren nach einem der vorhergehenden Ansprüche, **dadurch gekennzeichnet, dass** auch das in das Bohrloch (11) der Bearbeitungsstelle (B) eingesetzte Nietelement (4) vor dem Einsetzen von der Messvorrichtung (19) vermessen wurde und dass die Werkzeugsteuerdaten (9a) für das gemäß der Fertigungsvorschrift (10) anschließend zu bohrende Bohrloch (11) an der weiteren Bearbeitungsstelle (B₁) zusätzlich auch basierend auf der Vermessung des in das Bohrloch (11) der Bearbeitungsstelle (B) eingesetzten Nietelements (4) angepasst werden.

14. Verfahren nach einem der vorhergehenden Ansprüche, **dadurch gekennzeichnet, dass** das Verfahren an der weiteren Bearbeitungsstelle (B₁) als neue Bearbeitungsstelle (B₁) wiederholt wird und die Werkzeugsteuerdaten (9a) für eine auf diese neue Bearbeitungsstelle (B₁) folgende Bearbeitungsstelle (B₂) angepasst werden.

15. Verfahren nach einem der vorhergehenden Ansprüche, **dadurch gekennzeichnet, dass** die Fertigungsprozesssteuerung (9) erfasst, ob das an der weiteren Bearbeitungsstelle (B₁) zu setzende Nietelement (4) zu derselben Charge wie das eingesetzte Nietelement (4) an der Bearbeitungsstelle (B) gehört, oder, ob es zu einer neuen Charge gehört, vorzugsweise, dass wenn das an der weiteren Bearbeitungsstelle (B₁) zu setzende Nietelement (4) zu einer neuen Charge gehört, das Verfahren an der weiteren Bearbeitungsstelle (B₁) als neue Bearbeitungsstelle (B₁) wiederholt wird und die Werkzeugsteuerdaten (9a) für eine auf diese neue Bearbeitungsstelle (B₁) folgende Bearbeitungsstelle (B₂) angepasst werden.

16. Bearbeitungsanlage zum Bearbeiten eines Flugzeugstrukturbauteils (2), wobei die Bearbeitungsanlage (1) eine Bohreinheit (3a), eine Nieteinheit (3b), eine Fertigungsprozesssteuerung (9) für die Ansteuerung der Komponenten der Bearbeitungsanlage (1), einen optischen Sensor (12) und eine Projektionseinheit (13) aufweist,
wobei
die Bearbeitungsanlage (1) zum Bearbeiten eines Flugzeugstrukturbauteils (2) gemäß dem Verfahren nach einem der Ansprüche 1 bis 15 ausgebildet und eingerichtet ist.

## Claims

1. Method for machining an aircraft structural component (2) using a machining system (1), wherein the machining system (1) has a drilling unit (3a) and a riveting unit (3b),
wherein a manufacturing process control (9) for activating the components of the machining system (1) is provided,
wherein the manufacturing process control (9) executes a series of drilling procedures by means of the drilling unit (3a) and of riveting procedures by means of the riveting unit (3b) based on tool control data (9a) according to a manufacturing specification (10). wherein the manufacturing system (1) has an optical sensor (12) and a projection unit (13),
wherein the method comprises the steps:
- projecting a pattern (M), using the projection unit (13), onto a machining point (B) with a rivet element (4) inserted into a drilled hole (11) of the machining point (B),
- detecting the machining point (B), including the projection of the pattern (M), using the sensor (12) and generating corresponding detection data (14) by means of the sensor (12),
- analysing the detection data (14) by means of an analysis unit (15),
- adapting the tool control data (9a) for a drilled hole (11) which is to be subsequently drilled according to the manufacturing specification (10) at a further machining point (B1), in particular the countersink depth (T) of the drilled hole (11) to be drilled, by means of the manufacturing process control (9) based on the analysis of the detection data (14).

2. Method according to Claim 1, **characterized in that** a head projection (K) of the rivet element (4) is determined during the analysis, and/or **in that** an angled position of the rivet element (4) is determined during the analysis, preferably **in that**, based on this analysis, the countersink depth (T) is adapted in the tool control data (9a) for the drilled hole (11) which is to be subsequently drilled.

3. Method according to Claim 1 or 2, **characterized in that** the pattern (M) comprises at least one stripe (16), preferably **in that** the pattern (M) is a striped projection having at least two or at least three, in particular parallel, stripes (16).

4. Method according to one of the preceding claims, **characterized in that** at least one stripe (16) is wider or narrower than the other stripe(s) (16) and/or a mutual distance between the stripes (16) differs.

5. Method according to one of the preceding claims, **characterized in that** the pattern (M) consists exclusively of parallel stripes (16) or **in that** the pattern (M) consists of a predetermined point cloud (17) or **in that** the pattern (M) is a grid pattern (18), preferably **in that** the grid pattern (18) consists of polygons, in particular triangles (18a) and/or squares (18b) .

6. Method according to one of the preceding claims, **characterized in that**, at the machining point (B), the head projection (K) is determined by identifying an offset (V) of the pattern (M), in particular of one or more stripes (16) of the pattern (M), on the head (4b) of the rivet element (4) in relation to the pattern (M) on the aircraft structural component (2) at the machining point (B) or with respect to a reference (R).

7. Method according to one of the preceding claims, **characterized in that**, at the machining point (B), an angled position of the rivet element (4) is determined by identifying a rotation (D) of the pattern (M) on the head (4b) of the rivet element (4) with respect to the pattern (M) on the aircraft structural component (2) at the machining point (B) or with respect to a reference (R) and/or by identifying a compression or elongation (S) of the pattern (M) on the head (4b) of the rivet element in relation to the pattern (M) on the aircraft structural component (2) at the machining point (B) or with respect to a reference (R).

8. Method according to one of the preceding claims, **characterized in that**, during the detection of the machining point (B), the projection unit (13) and the sensor (12) are directed onto this machining point at an angle (α) to one another, preferably **in that** this angle (α) is between 20° and 90°, further preferably between 45° and 75°, further preferably between 55° and 65°, and is in particular substantially 60°.

9. Method according to one of the preceding claims, **characterized in that**, during the detection, the projection unit (13) is directed onto the machining point (B) at an angle in relation to the longitudinal axis of the drilled hole (11), preferably **in that** the angle (β) between the direction of the projection (P) by the projection unit (13) and the longitudinal axis (11b) of the drilled hole (11) is between 45° and 75°, further preferably between 55° and 65°, and is in particular substantially 60°.

10. Method according to one of the preceding claims, **characterized in that**, during the detection, the sensor (12) is directed onto the machining point (B) from above, in particular orthogonally.

11. Method according to one of the preceding claims, **characterized in that** the analysis and the adaptation is based on detection data (14) which are generated when the rivet element (4) is inserted and the rivet connection is not yet produced, and/or **in that** the analysis and the adaptation is based on detection data (14) which are generated when the rivet element is inserted and the rivet connection is already produced.

12. Method according to one of the preceding claims, **characterized in that** a measuring device (19) for measuring the rivet elements (4) before their insertion into the drilled holes (11) is provided and **in that** the tool control data (9a) for the drilled hole (11) which is to be subsequently drilled according to the manufacturing specification (10) at the further machining point (B₁) is additionally also adapted based on the measurement of the rivet element (4) which is to be positioned in this drilled hole (11).

13. Method according to one of the preceding claims, **characterized in that** the rivet element (4) inserted into the drilled hole (11) of the machining point (B) has also been measured by the measuring device (19) before its insertion and **in that** the tool control data (9a) for the drilled hole (11) which is to be subsequently drilled according to the manufacturing specification (10) at the further machining point (B₁) are additionally also adapted based on the measurement of the rivet element (4) inserted into the drilled hole (11) of the machining point (B).

14. Method according to one of the preceding claims, **characterized in that** the method is repeated at the further machining point (B₁) as a new machining point (B₁) and the tool control data (9a) are adapted for a machining point (B₂) following this new machining point (B₁).

15. Method according to one of the preceding claims, **characterized in that** the manufacturing process control (9) detects whether the rivet element (4) which is to be positioned at the further machining point (B₁) belongs to the same batch as the rivet element (4) inserted at the machining point (B) or whether it belongs to a new batch, preferably **in that**, if the rivet element (4) which is to be positioned at the further machining point (B₁) belongs to a new batch, the method is repeated at the further machining point (B₁) as a new machining point (B₁) and the tool control data (9a) are adapted for a machining point (B₂) following this new machining point (B₁).

16. Machining system for machining an aircraft structural component (2), wherein the machining system (1) has a drilling unit (3a), a riveting unit (3b), a manufacturing process control (9) for activating the components of the machining system (1), an optical sensor (12) and a projection unit (13),
wherein
the machining system (1) for machining an aircraft structural component (2) is designed and configured according to the method according to one of Claims 1 to 15.

## Revendications

1. Procédé d'usinage d'un composant (2) de structure d'aéronef au moyen d'une installation d'usinage (1), l'installation d'usinage (1) présentant une unité de perçage (3a) et une unité de rivetage (3b),
un système (9) de commande de processus de fabrication étant prévu pour la commande des composants de l'installation d'usinage (1),
le système (9) de commande de processus de fabrication exécutant, selon une instruction de fabrication (10), une succession d'opérations de perçage au moyen de l'unité de perçage (3a) et d'opérations de rivetage au moyen de l'unité de rivetage (3b) en utilisant des données (9a) de commande d'outil,
l'installation d'usinage (1) comprenant un capteur optique (12) et une unité de projection (13),
le procédé comprenant les étapes consistant à :
- projeter un motif (M) au moyen de l'unité de projection (13) sur un emplacement d'usinage (B) avec un élément de rivetage (4) inséré dans un trou (11) de l'emplacement d'usinage (B),
- détecter l'emplacement d'usinage (B), y compris la projection du motif (M), au moyen du capteur (12), et, par le capteur (12), générer des données de détection correspondantes (14),
- évaluer, par une unité d'évaluation (15), les données de détection (14),
- adapter, au moyen du système (9) de commande de processus de fabrication, sur la base de l'évaluation des données de détection (14), les données (9a) de commande d'outil pour un trou de perçage (11) à percer ensuite selon l'instruction de fabrication (10) à un autre emplacement d'usinage (B1), en particulier la profondeur de fraisage (T) du trou de perçage (11) à percer.

2. Procédé selon la revendication 1, **caractérisé en ce que**, lors de l'évaluation, un dépassement (K) de tête de l'élément de rivetage (4) est déterminé, et/ou **en ce que**, lors de l'évaluation, une position inclinée de l'élément de rivetage (4) est déterminée, de préférence **en ce que**, sur la base de cette évaluation, la profondeur de fraisage (T) est adaptée dans les données (9a) de commande d'outil pour le trou de perçage (11) à percer ensuite.

3. Procédé selon la revendication 1 ou la revendication 2, **caractérisé en ce que** le motif (M) présente au moins une bande (16), de préférence **en ce que** le motif (M) est une projection de bandes avec au moins deux ou au moins trois bandes (16), en particulier parallèles.

4. Procédé selon l'une des revendications précédentes, **caractérisé en ce qu'**au moins une bande (16) est plus large ou plus étroite que la ou les autres bandes (16) et/ou une distance entre les bandes (16) est différente.

5. Procédé selon l'une des revendications précédentes, **caractérisé en ce que** le motif (M) est constitué exclusivement de bandes parallèles (16), ou **en ce que** le motif (M) est constitué d'un nuage de points prédéterminé (17), ou **en ce que** le motif (M) est un motif en grille (18), de préférence **en ce que** le motif en grille (18) est constitué de polygones, notamment de triangles (18a) et/ou de quadrilatères (18b).

6. Procédé selon l'une des revendications précédentes, **caractérisé en ce qu'**au niveau de l'emplacement d'usinage (B), le dépassement (K) de tête est déterminé par la détermination d'un décalage (V) du motif (M), notamment d'une ou plusieurs bandes (16) du motif (M), sur la tête (4b) de l'élément de rivetage (4) par rapport au motif (M) sur le composant (2) de structure d'aéronef au niveau de l'emplacement d'usinage (B) ou par rapport à une référence (R).

7. Procédé selon l'une des revendications précédentes, **caractérisé en ce qu'**une inclinaison de l'élément de rivetage (4) est déterminée au niveau de l'emplacement d'usinage (B) par la détermination d'une rotation (D) du motif (M) sur la tête (4b) de l'élément de rivetage (4) par rapport au motif (M) sur le composant (2) de structure d'aéronef au niveau de l'emplacement d'usinage (B) ou par rapport à une référence (R) et/ou une détermination d'une compression ou d'un étirement (S) du motif (M) sur la tête (4b) de l'élément de rivetage par rapport au motif (M) sur le composant (2) de structure d'aéronef au niveau de l'emplacement d'usinage (B) ou par rapport à une référence (R).

8. Procédé selon l'une quelconque des revendications précédentes, **caractérisé en ce que** l'unité de projection (13) et le capteur (12) sont orientés l'un par rapport à l'autre selon un angle (α) lors de la détection de l'emplacement d'usinage (B), de préférence **en ce que** cet angle (α) est compris entre 20° et 90°, de façon encore préférée entre 45° et 75°, de façon encore préférée entre 55° et 65°, notamment est de sensiblement 60°.

9. Procédé selon l'une des revendications précédentes, **caractérisé en ce que** l'unité de projection (13), lors de la détection, est orientée angulairement par rapport à l'axe longitudinal du trou de perçage (11) vers l'emplacement d'usinage (B), de préférence **en ce que** l'angle (β) entre la direction de la projection (P) de l'unité de projection (13) et l'axe longitudinal (11b) du trou de perçage (11) est compris entre 45° et 75°, de préférence entre 55° et 65°, notamment est de sensiblement 60°.

10. Procédé selon l'une des revendications précédentes, **caractérisé en ce que** le capteur (12), lors de la détection, est orienté par le haut vers l'emplacement d'usinage (B), notamment orthogonalement.

11. Procédé selon l'une des revendications précédentes, **caractérisé en ce que** l'évaluation et l'adaptation reposent sur des données de détection (14) dont la génération a eu lieu lorsque l'élément de rivetage (4) est en place et que le rivetage n'est pas encore réalisé, et/ou **en ce que** l'évaluation et l'adaptation reposent sur des données de détection (14) dont la génération a eu lieu lorsque l'élément de rivetage est en place et que le rivetage est déjà réalisé.

12. Procédé selon l'une des revendications précédentes, **caractérisé en ce qu'**il est prévu un dispositif de mesure (19) pour mesurer les éléments de rivetage (4) avant leur mise en place dans les trous de perçage (11), et **en ce que** les données (9a) de commande d'outil pour le trou de perçage (11) à percer ensuite selon l'instruction de fabrication (10) sont adaptées à l'autre emplacement d'usinage (B₁) en se basant également sur la mesure de l'élément de rivetage (4) à mettre en place dans ce trou de perçage (11).

13. Procédé selon l'une des revendications précédentes, **caractérisé en ce que** l'élément de rivetage (4) inséré dans le trou de perçage (11) de l'emplacement d'usinage (B) a également été mesuré par le dispositif de mesure (19) avant son insertion, et **en ce que** les données (9a) de commande d'outil pour le trou de perçage (11) à percer ensuite selon l'instruction de fabrication (10) à l'autre emplacement d'usinage (B₁) sont adaptées en outre également sur la base de la mesure de l'élément de rivetage (4) inséré dans le trou de perçage (11) de l'emplacement d'usinage (B).

14. Procédé selon l'une des revendications précédentes, **caractérisé en ce que** le procédé est répété à l'autre emplacement d'usinage (B₁) comme nouvel emplacement d'usinage (B₁), et les données (9a) de commande d'outil sont adaptées pour un emplacement d'usinage (B₂) suivant ce nouvel emplacement d'usinage (B₁).

15. Procédé selon l'une des revendications précédentes, **caractérisé en ce que** le système (9) de commande de processus de fabrication détecte si l'élément de rivetage (4) à poser à l'autre emplacement d'usinage (B₁) appartient au même lot que l'élément de rivetage (4) posé à l'emplacement d'usinage (B), ou s'il appartient à un nouveau lot, de préférence, **en ce que**, si l'élément de rivetage (4) à poser à l'autre emplacement d'usinage (B₁) appartient à un nouveau lot, le procédé est répété à l'autre emplacement d'usinage (B₁) en tant que nouvel emplacement d'usinage (B₁), et les données (9a) de commande d'outil sont adaptées pour un emplacement d'usinage (B₂) suivant ce nouvel emplacement d'usinage (B₁).

16. Installation d'usinage pour l'usinage d'un composant (2) de structure d'aéronef, l'installation d'usinage (1) comprenant une unité de perçage (3a), une unité de rivetage (3b), un système (9) de commande de processus de fabrication pour la commande des composants de l'installation d'usinage (1), un capteur optique (12) et une unité de projection (13),
l'installation d'usinage (1) étant conçue et aménagée pour l'usinage d'un composant (2) de structure d'aéronef selon le procédé selon l'une des revendications 1 à 15.
